# EUROPEAN PATENT APPLICATION

(11) **EP 4 525 230 A1**
(43) Date of publication of application: **19.03.2025**
(21) Application number: 24198744.5
(22) Date of filing: 05.09.2024
(51) Int. Cl.: H02B 13/025

(54) **SWITCHGEAR DUCT**

(30) Priority: 13.09.2023 IN 202311061532; 31.10.2023 GB 202316646
(71) Applicant: Eaton Intelligent Power Limited, Dublin 4 (IE)
(72) Inventor: SOLASE, Rushikesh, 413307 Sangola (IN); PAWAR, Vishal, 411002 Pune (IN); WAGHMORE, Minal, 416115 Ichalkaranji (IN); KONA, Kaushik, 411021 Pune (IN); PETERMAN-GUNTHER, Yvette, 7678VH Geesteren (NL); JONG DE, Johan, 7559 Hengelo (NL)
(74) Representative: Seymour-Pierce, Alexandra Isobel

(57) **Abstract**

Disclosed herein is a switchgear duct (104) having at least two duct portions (104a, 104c). In particular, there is disclosed a system comprising a switchgear, wherein gas is generated within the switchgear during an arc event. The system also comprises a duct (104) having at least first (104a) and second (104c) portions, the duct further comprising an inlet (106) to receive the generated gas into the duct (104), wherein the inlet (106) is formed in the first portion (104a) of the duct (104), an outlet (108) to expel the generated gas from the duct (104), wherein the outlet (108) is formed in the second portion (104c) of the duct (104), and a path formed between the inlet (106) and the outlet (108) to channel the generated gas through the duct (104). A minimum angle between the path in two of the at least two ducting portions is 180 degrees.

## Description

### FIELD

This relates to a switchgear having a duct or chimney for venting gases from an arc ignition region where an arc is formed. In particular, this relates to a switchgear having duct or chimney comprising at least two ducting portions.

### BACKGROUND

In developed switchgear markets, switchgear dimensions are expected to be compact to meet the customer's demand. It is also expected that the switchgear products meet IEC compliance for IAC (internal arc classification) ratings. IAC tests are one of the major tests for a switchgear product, and performance is highly dependent on the compactness of the switchgear and the way the arc is quenched inside the switchgear.

IAC ratings are defined in IEC 62271-200 (current version of IEC 62271-200 at the time of filing has a publication date of 27 May 2021, edition 3.0) and IEC 62271-202 (current version of IEC 62271-202 at the time of filing has a publication date of 22 June 2022, edition 3.0). The ratings help to define internal arc performance of medium voltage or high voltage switchgear. IAC "A" means rated for switchgear installation in rooms with access for authorized personnel, closed electrical service location. IAC "B" means rated for public safety, and is more stringent than an "A" rating. Protected access to the switchgear by the operator is classified as "F" front, "L" lateral and "R" rear: A-F switchgear is front only protection for users; A-FL switchgear is front and side (lateral) protection for users; and A-FLR is all sided switchgear (front, lateral, rear) protection for users.

It is desirable to provide a compact switchgear which can meet IAC A/B-FLR ratings as per the above-mentioned IEC 62271-202 standard.

### SUMMARY

Disclosed herein is a switchgear duct (also called herein a chimney) having at least two duct portions. A system comprises a switchgear, wherein gas is generated within the switchgear in response to, or during, an arc event. In other words, the switchgear is configured to withstand an arc event and the generated hot gas, where for any given arc event the hot gas is generated at the specific point/region where the arc forms (arc ignition region). The system further comprises a duct having at least first and second portions, the duct further comprising an inlet to receive the generated gas into the duct, wherein the inlet is formed in the first portion of the duct, and an outlet to expel the generated gas from the duct, wherein the outlet is formed in the second portion of the duct. A path is formed between the inlet and the outlet to channel the generated gas through the duct, wherein a minimum angle between the path in two of the at least two ducting portions is 180 degrees.

In other words, two of the portions of the duct are arranged such that the respective flow paths within the two portions extend at 180 degrees to one another (i.e. extend generally in opposite directions). The respective duct portions can be parallel to one another, but the overall gas flow is in opposite directions through those respective portions. In specific implementations with only two ducting portions, there is 180 degrees between the path in the first portion and the path in the second portion.

This arrangement can facilitate provision of a compact switchgear with effective cooling and venting of gases generated during an arc event.

Optionally, one or both of the first and second portions of the duct comprise at least one 180 degree turn, optionally, wherein the path within both the first and second portions of the duct comprises at least two 180 degree turns. This arrangement can further facilitate provision of a compact switchgear with effective cooling and venting of gases generated during an arc event.

In some examples, the first and second portions of the duct comprise a duct arranged along a (single) surface of the switchgear, wherein the duct comprises a first side and a second side separated by an internal division, wherein the first side corresponds to the first portion of the duct and the second side corresponds to the second portion of the duct, and wherein the path enters the side duct on the first side of the internal division and the outlet is on the second side of the internal division, wherein the path turns 180 degrees between the first side of the internal division and the second side of the internal division.

In some examples, the first and second ducting portions are adjacent one another, i.e. there is no other ducting portion in between the first and second ducting portions.

The first and second ducting portions can be formed as part of a single component, or can be formed as two separate components.

In some other examples, the duct further comprises at least three ducting potions. The duct comprises a third portion, the third portion disposed between the first and second portions. In some implementations, there is at least a 90 degree turn between the path in the first portion and the path in the third portion, and there is at least a 90 degree turn between the path in the third portion and the path in the second portion, so as to provide a minimum angle between the path in two of the at least three ducting portions of 180 degrees. Any suitable angle may be provided between respective duct portions to facilitate a minimum angle of 180 degrees between two of the at least three ducting portions.

Also disclosed is a switchgear duct (also called herein a chimney) having at least three duct portions. In particular, disclosed is a system comprising a switchgear, wherein gas is generated within the switchgear during an arc event. The system also comprises a duct having first, third, and second portions, the third portion disposed between the first and second portions. The duct further comprises an inlet to receive the generated gas into the duct, wherein the inlet is formed in the first portion of the duct, an outlet to expel the generated gas from the duct, wherein the outlet is formed in the second portion of the duct, and a path formed between the inlet and the outlet to channel the generated gas through the duct. There is a minimum angle between the path in two of the at least three ducting portions of 180 degrees.

Optionally, there is at least a 90 degree turn between the path in the first portion and the path in the third portion, and wherein there is at least a 90 degree turn between the path in the third portion and the path in the second portion. In other examples, any suitable angle may be provided between respective duct portions to facilitate a minimum angle of 180 degrees between two of the at least three ducting portions.

This arrangement can facilitate the provision of a compact switchgear with effective cooling and venting of gases generated during an arc event.

Optionally, the path within at least two of the first, second and third portions of the duct comprises at least one 180 degree turn. Optionally, the path within at least two of the first, second and third portions of the duct comprises at least two 180 degree turns.

As described herein, when in use (normal operational state), the switchgear comprises a front surface, a rear surface opposite the front surface, two side surfaces, each extending between the front surface and the rear surface, a top surface, and a base surface opposite the top surface.

In some example implementations, the first portion of the duct comprises a base duct arranged along the base surface, the third portion of the duct comprises a rear duct arranged along the rear surface, and the second portion of the duct comprises a side duct arranged along one of the side surfaces.

In other example implementations, the duct further comprises a fourth portion disposed between the third and second portions of the duct. Optionally, the first portion of the duct comprises a base duct arranged along the base surface, the third portion of the duct comprises a rear duct arranged along the rear surface, and the second and fourth portions of the duct comprise a side duct arranged along one of the side surfaces. Optionally, the side duct comprises a first side and a second side separated by an internal division, wherein the first side corresponds to the fourth portion of the duct and the second side corresponds to the second portion of the duct. Optionally, the path enters the side duct on the first side of the internal division and the outlet is on the second side of the internal division, wherein the path turns 180 degrees between the first side of the internal division and the second side of the internal division.

In other example implementations, the first portion of the duct comprises a rear duct arranged along the rear surface, and the third and second portions of the duct comprise a side duct arranged along one of the side surfaces. Optionally, the side duct comprises a first side and a second side separated by an internal division, wherein the first side corresponds to the third portion of the duct and the second side corresponds to the second portion of the duct. Optionally, the path enters the side duct on the first side of the internal division and the outlet is on the second side of the internal division, wherein the path turns 180 degrees between the first side of the internal division and the second side of the internal division.

In other example implementations, the first and third portions of the duct comprises a rear duct arranged along the rear surface, and the second portion of the duct comprises a side duct arranged along one of the side surfaces. Optionally, the rear duct comprises a first side and a second side separated by an internal division, wherein the first side corresponds to the first portion of the duct and the second side corresponds to the third portion of the duct. Optionally, the inlet is on the first side of the internal division and the path exits the rear duct on the second side of the internal division, wherein the path turns 180 degrees between the first side of the internal division and the second side of the internal division.

In other example implementations, the first portion of the duct comprises a base duct arranged along the base surface, and the third and second portions of the duct comprise a rear duct arranged along the rear surface. Optionally, the rear duct comprises a first side and a second side separated by an internal division, wherein the first side corresponds to the third portion of the duct and the second side corresponds to the second portion of the duct. Optionally, the path enters the rear duct on the first side of the internal division and the outlet is on the second side of the internal division, wherein the path turns 180 degrees between the first side of the internal division and the second side of the internal division.

In some examples, there is at least a 180 degree turn between the path in the third portion and the path in the second portion.

In other example implementations, the first portion of the duct comprises a rear duct arranged along the rear surface, the third portion of the duct comprises a top duct arranged along the top surface, and the second portion of the duct comprises a side duct arranged along one of the side surfaces.

Optionally, one or more arc absorbers are disposed within the duct. Optionally, each of the one or more arc absorbers comprises a ceramic arc absorber and/or a stack of perforated metal sheets.

Optionally, each stack of perforated metal sheets comprises: a stack of metal sheets with round apertures; or a stack of metal sheets with square apertures; or a stack comprising alternating layers of metal sheets with round apertures and metal sheets with square apertures.

In some examples, one or more of the first, third and second portions of the duct are formed as separate components. In some examples, two or more of the first, third and second portions of the duct are integrally formed.

In some specific implementations, the switchgear is an IAC AB FLR 25kA/1s rated switchgear.

### LIST OF FIGURES

The detailed description is with reference to the following figures. Like reference numerals refer to like features.
Figures 1A, 1B, 1C and 1D show schematic diagrams of example implementations of a system comprising a switchgear, as described herein.
Figure 2 illustrates a front view of an example switchgear portion.
Figure 3 shows a schematic diagram of an example switchgear.
Figures 4A-4D illustrate one example duct configuration.
Figures 5A-5C illustrate another example duct configuration.
Figures 6A-6C illustrate another example duct configuration.
Figures 7A-7C illustrate another example duct configuration.
Figures 8A-8C illustrate another example duct configuration.
Figures 9A-9C illustrate another example duct configuration.
Figures 10A-10D illustrate example arc absorbers for use with the ducts described herein.
Figure 11 shows an example system.
Figure 12 shows another example system.

### DETAILED DESCRIPTION

An existing switchgear is the Eaton XIRIA 630A 20kA/1s A-FL (indoor solution) switchgear. This product is capable of passing the 20kA/1s IAC test set out in IEC 62271-200 (current version of IEC 62271-200 at the time of filing has a publication date of 27 May 2021, edition 3.0).

In case of an internal arc, or arc event, inside the switchgear, hot gases are generated at an arc ignition region (region of arc initiation/formation/ignition) and pass through a duct/chimney (XIRIA 630A uses a single rear chimney). These gases are ultimately sent into the atmosphere after they flow through a series of ceramic arc absorbers inside the chimney. During the period of the gas flow through chimney, there is a reduction in gas pressure and temperature, which assists in passing the IAC test. However, it is desirable to provide a switchgear which can meet the above-mentioned IEC 62271-202 standard IAC 25kA/1s A/B-FLR ratings and so be suitable for outdoor applications.

The IAC tests are different for "A" and "B" ratings. The XIRIA 630A A-FL rated switchgear has a height greater than 2m, and cotton indicators must be placed 300mm from the sides and front of the switchgear during testing in accordance with the IEC standard. In contrast, compact B-FLR rated switchgears should have a maximum height of 1.8m, and so the cotton indicators must be placed 100mm from the front and sides of the switchgear, as well as 100mm above the switchgear. If the cotton indicators burn due to the hot gases, the switchgear fails the test. In this regard, the cotton indicators facilitate measurement of the heat of the expelled gas.

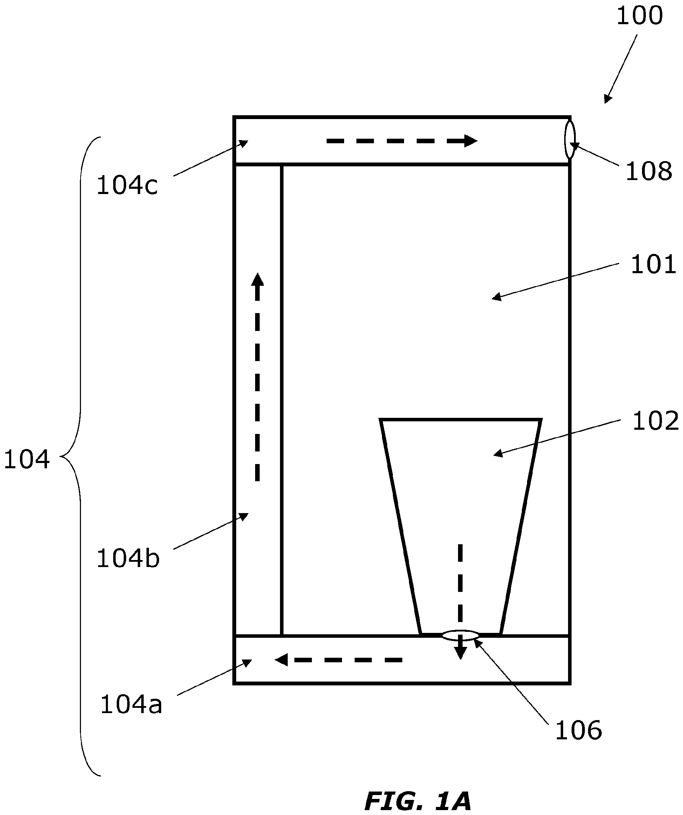

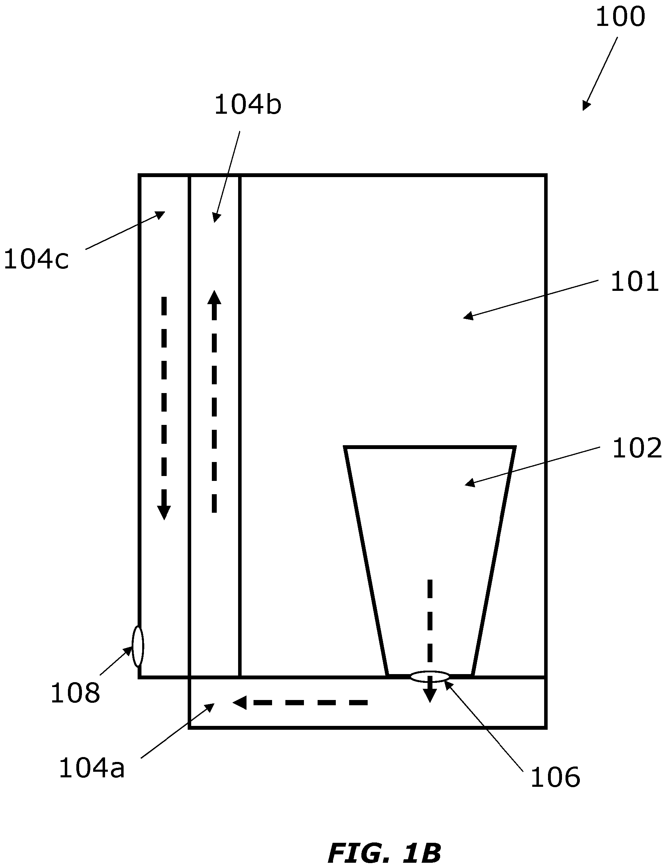

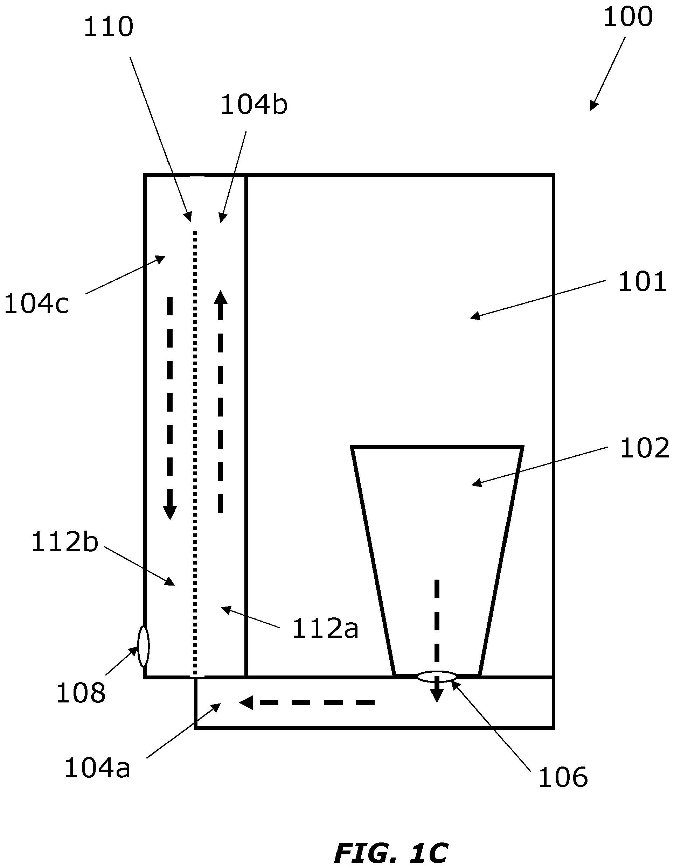

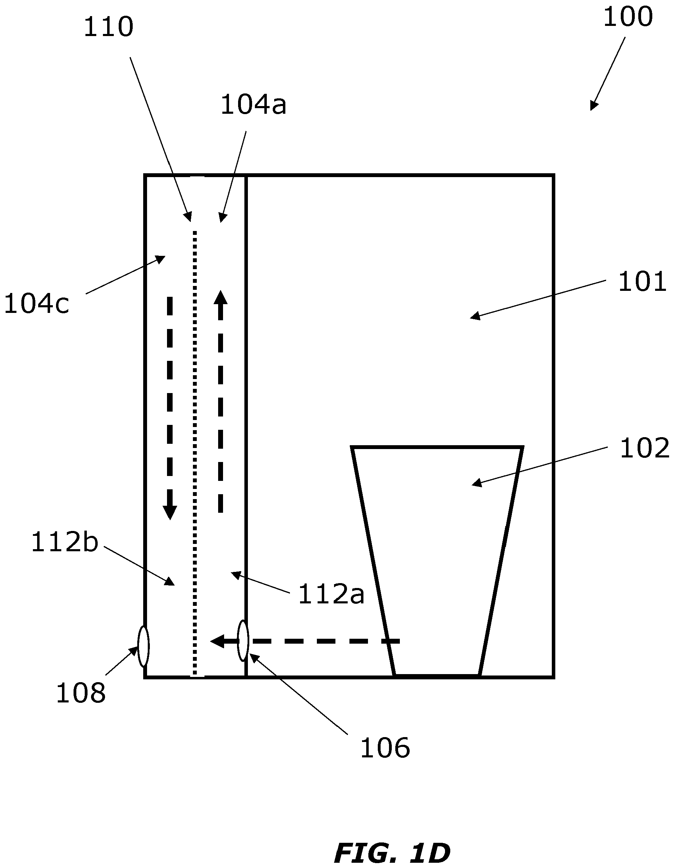

A highly optimized design and architecture of chimneys or ducts having at least two ducting portions can help to pass these IEC compliance tests, whilst facilitating the provision of a compact switchgear, as is discussed below with reference to Figures 1A, 1B, 1C and 1D. In the following description the switchgear is an IAC AB FLR 25kA/1s rated switchgear, but it will be understood that the duct (or chimney) arrangements described can be applied to any type of switchgear.

Figure 1A shows a first example of a system 100 comprising a switchgear 101. The switchgear 101 comprises operational components including one or more circuit breakers or switches (not described here) within the switchgear, as would be understood by the skilled person. The switchgear 101 also includes an arc ignition compartment 102 within a body of the switchgear. The switchgear is configured so that any arc formation (any arc events) occur within the arc ignition compartment. In other words, the arc ignition region where the arc forms and the gas is generated is within the arc ignition compartment 102. The arc ignition compartment 102 (shown schematically for illustrative purposes only) can contain all the switching apparatus, circuit breakers, etc. and can be e.g. separate from a cable compartment. During opening of the circuit breakers/switches in response to a short circuit between phases, neutral or ground, arcing occurs within the switchgear. This arcing is also referred to as an arc event.

Hot gas is generated at the arc ignition region in the arc ignition compartment 102 during an arc event. The gas is channelled through a duct 104 of the switchgear. The duct 104 is designed to reduce the temperature and pressure of the generated gas, such that it can be safely expelled into an environment of the switchgear (either the atmosphere, or an external enclosure around the switchgear).

The duct 104 comprises at least three portions, the at least three portions including a first portion 104a, a second portion 104c and a third portion 104b. The third portion is disposed between the first and second portions. An inlet 106 is formed in the first portion 104a of the duct, the inlet configured to receive the gas generated in the arc ignition compartment 102 into the duct 104. An outlet 108 is formed in the second portion 104c of the duct to expel the generated gas from the duct. A path is formed between the inlet and the outlet to channel the generated gas through the duct; the flow of gas is illustrated by the dashed arrows in Figure 1A. Although not shown, it will be understood that the respective ducting portions comprise one or more openings, apertures, or holes to allow the gas to flow along the path and between the different ducting portions.

There is a minimum angle of 180 degrees between the first 104a and second duct 104c portions. There is a 90 degree turn between the path in the first portion 104a of the duct and the path in the third portion 104b of the duct. There is a 90 degree turn between the path in the third portion 104b of the duct and the path in the second portion 104c of the duct (but any other angle can be used). In this way, the path length of the gas can be increased by effectively using the space around the switchgear. In this example, the ducting portions are arranged on a bottom, rear and top of the switchgear 101, though this arrangement is only for illustrative purposes and other arrangements are possible, as discussed below.

In this example, each of the first, second and third portions of the duct are formed as separate components, but in other arrangements two or more of the ducting portions may be integrally formed (i.e. as a single component comprising a 90 degree turn). In other words, the duct 104 can be formed of any suitable number of duct pieces/components.

Figure 1B shows a second example of a system 100 comprising a switchgear 101. The switchgear 101 comprises operational components including one or more circuit breakers or switches (not described here) within the switchgear, as would be understood by the skilled person. The switchgear 101 also includes an arc ignition compartment 102 within a body of the switchgear. During opening of the circuit breakers/switches in response to a short circuit between phases, neutral or ground, arcing occurs within the switchgear. This arcing is also referred to as an arc event.

Hot gas is generated (at the arc ignition region) within the arc ignition compartment 102 during an arc event. The gas is channelled through a duct 104 of the switchgear. The duct 104 is designed to reduce the temperature and pressure of the generated gas, such that it can be safely expelled into an environment of the switchgear.

The duct 104 comprises at least three portions, the at least three portions including a first portion 104a, a second portion 104c and a third portion 104b. The third portion is disposed, arranged or provided between the first and second duct portions.

An inlet 106 is formed in the first portion 104a of the duct an inlet to receive the gas generated in the arc ignition compartment 102 into the duct 104. An outlet 108 is formed in the second portion 104c of the duct to expel the generated gas from the duct. A path is formed between the inlet and the outlet to channel the generated gas through the duct; the flow of gas is illustrated by the dashed arrows in Figure 1B. Although not shown, it will be understood that the respective ducting portions comprise one or more openings, apertures or holes to allow the gas to flow along the path and between the different ducting portions.

There is a minimum angle of 180 degrees between the third 104b and second duct 104c portions. There is a 90 degree turn between the path in the first portion 104a of the duct and the path in the third portion 104b of the duct. There is a 90 degree turn between the path in the third portion 104b of the duct and the path in the second portion 104c of the duct. In this instance, there is a 180 degree turn between the path in the third portion 104b and the path in the second portion 104c. However, any other angles can be used. In this way, the path length of the gas can be increased by effectively using the space around the switchgear. In this example, the ducting portions are arranged on a bottom and rear of the switchgear 101, though this arrangement is only for illustrative purposes and other arrangements are possible, as discussed below.

In this example, each of the first, second and third portions of the duct can be formed as separate components, as shown in Figure 1B, or two or more of the ducting portions may be integrally formed. For example, the second and third ducting portions 104c, 104b can be integrally formed (i.e. as a single component comprising a 180 degree turn). Such an integrally formed component with two ducting portions can also be referred to as a "double pass" duct component.

With reference to the example system 100 of Figure 1C, which shows implementations in which the second and third ducting pieces are integrally formed, the two ducting portions can be considered as a single duct comprising an internal division 110, represented by a dotted line. A first side 112a of the internal division corresponds to the third portion 104b of the duct, and a second side 112b of the internal division 110 corresponds to the second portion 104c of the duct. In this example, the outlet 108 is arranged on the second side 112b of the internal division 110, and the inlet is arranged in the first duct portion 104a. In other arrangements (not shown), the first and third ducting portions 104a, 104b can be integrally formed, in which case the inlet can be formed or arranged on the first side of the division corresponding to the first duct portion 104a and the outlet can be formed in the second duct portion 104c.

Figure 1D shows another example of a system 100 comprising a switchgear 101. The switchgear 101 comprises operational components including one or more circuit breakers or switches (not described here) within the switchgear, as would be understood by the skilled person. The switchgear 101 also includes an arc ignition compartment 102 within a body of the switchgear. During opening of the circuit breakers/switches in response to a short circuit between phases, neutral or ground, arcing occurs within the switchgear. This arcing is also referred to as an arc event.

Hot gas is generated within the arc ignition compartment 102 during an arc event. The gas is channelled through a duct 104 of the switchgear. The duct 104 is designed to reduce the temperature and pressure of the generated gas, such that it can be safely expelled into an environment of the switchgear (either the atmosphere, or an external enclosure around the switchgear).

The duct 104 comprises at least two portions, the at least two portions including a first portion 104a and a second portion 104c. An inlet 106 is formed in the first portion 104a of the duct, the inlet configured to receive the gas generated in the arc ignition compartment 102 into the duct 104. An outlet 108 is formed in the second portion 104c of the duct to expel the generated gas from the duct. A path is formed between the inlet and the outlet to channel the generated gas through the duct; the flow of gas is illustrated by the dashed arrows in Figure 1D. In this example, the first and second portions are adjacent to one another. Although not shown, it will be understood that the respective first and second ducting portions comprise one or more openings, apertures, or holes to allow the gas to flow along the path and between the different ducting portions.

There is a minimum angle of 180 degrees between the first 104a and second duct 104c portions. There is a 180 degree turn between the path in the first portion 104a of the duct and the path in the second portion 104c of the duct. In this way, the path length of the gas can be increased by effectively using the space around the switchgear. In this example, the ducting portions are arranged along a single surface of switchgear 101, though this arrangement is only for illustrative purposes and other arrangements are possible, as discussed below.

In each of Figures 1A, 1B, 1C and 1D, the duct portions can be considered to be aligned with or placed against the switchgear 101. A sheet metal enclosure (not shown) can optionally be placed around the switchgear 101 (and optionally at least partially around the duct 104) to enclose the switchgear (and optionally both the duct and switchgear). The outlet can vent into the enclosure, which can contain the hot gases inside it for a fraction of time and then release the gas to the atmosphere later, such the maximum possible temperature and pressure reduction is achieved. In other examples, the outlet vents directly into the atmosphere.

By providing a duct with at least two ducting portions and a minimum angle of 180 degrees between two of the at least two ducting portions, as illustrated above, a gas path length can be increased in space efficient manner. A compact switchgear system may therefore be provided with increased IAC rating.

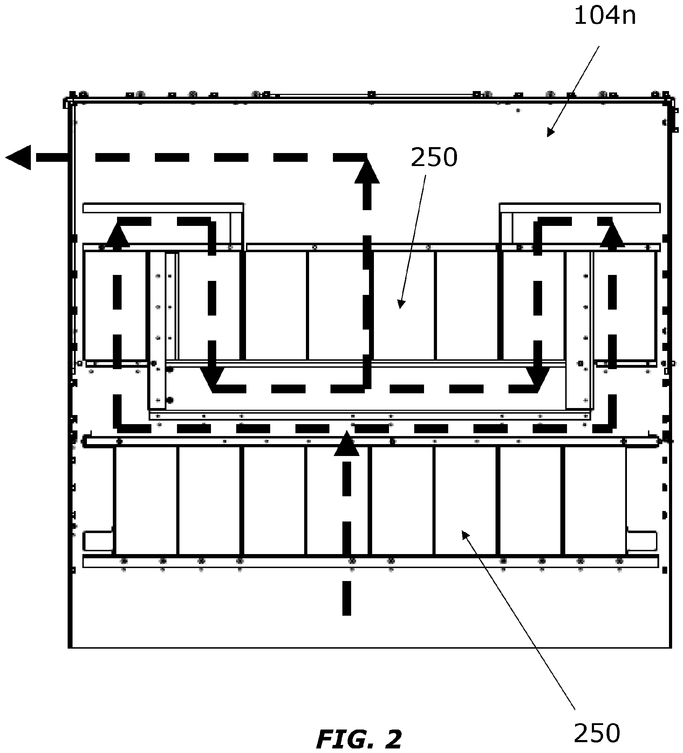

With reference to Figure 2, a specific example implementation of one of the portions 104n of the duct 104 is now described, showing the path of the gas through the duct portion 104n (gas flow represented by the dashed lines). In order to increase a gas path length, one or more portions 104n can comprise an internal path for the case flow which comprises at least one 180 degree turn within the duct portion 104n. In this example, it can be seen that the path comprises two 180 degree turns at either side of the duct portion 104n. By splitting and turning the gas flow in this way, the path length can be increased, reducing the temperature and pressure of the gas within a more compact duct portion. These 180 degree turns can also be termed a zig-zag path. The flow pattern can be described as comprising a straight entry path with a zig-zag exit path. The zig-zag, or 180 degree turns, can help to increase the gas flow path length so that the generated gases cool down quicker without increasing the overall size of the duct itself.

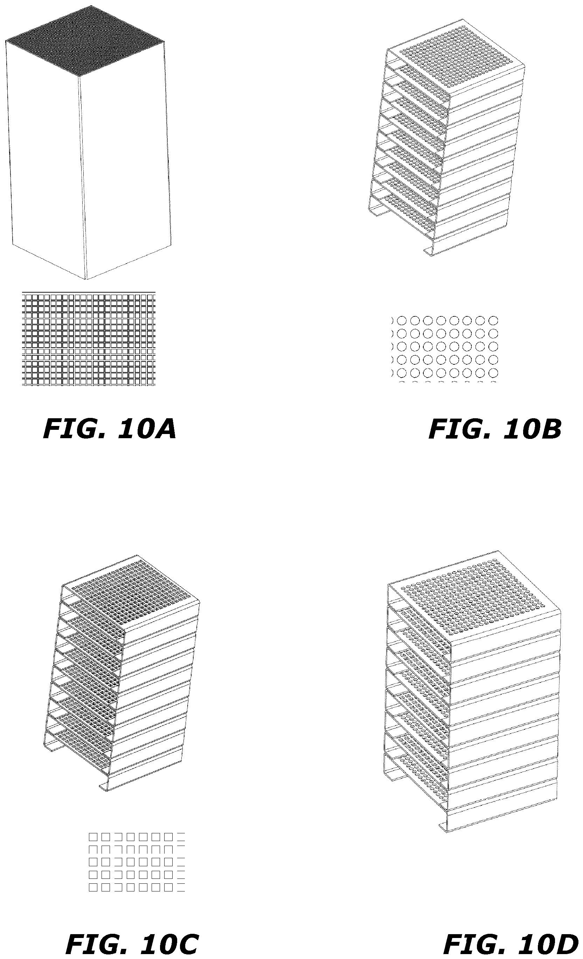

Optionally, the path within one or more of the at least two ducting portions comprises at least one 180 degree turn, optionally at least two 180 degree turns (as shown in Figure 2). This arrangement can help to further reduce the gas pressure and temperature as it is channelled through the duct. Where there are at least three ducting pieces, optionally the path within at least two of the first, third and second portions of the duct 104 comprises at least one 180 degree turn. In some implementations, the path within at least two of the first, third and second portions of the duct comprises at least two 180 degree turns (as shown in Figure 2). It can also be seen from Figure 2 how an exemplary 90 degree turn between each of three respective ducting portions can be achieved (the gas flowing into the portion 104n travels in a direction substantially perpendicular to the direction in which the gas travels out of the portion 104n) to facilitate a total turn of at least 180 degrees between the first and second portions. The ducts 104 described herein can be formed of a sheet metal, or any other suitable material. Optionally, the duct portion 104n can comprise one or more arc absorbers within the duct, as will be discussed further with reference to Figure 10. The arc absorber locations are indicated by the rectangles 250 shown within the duct.

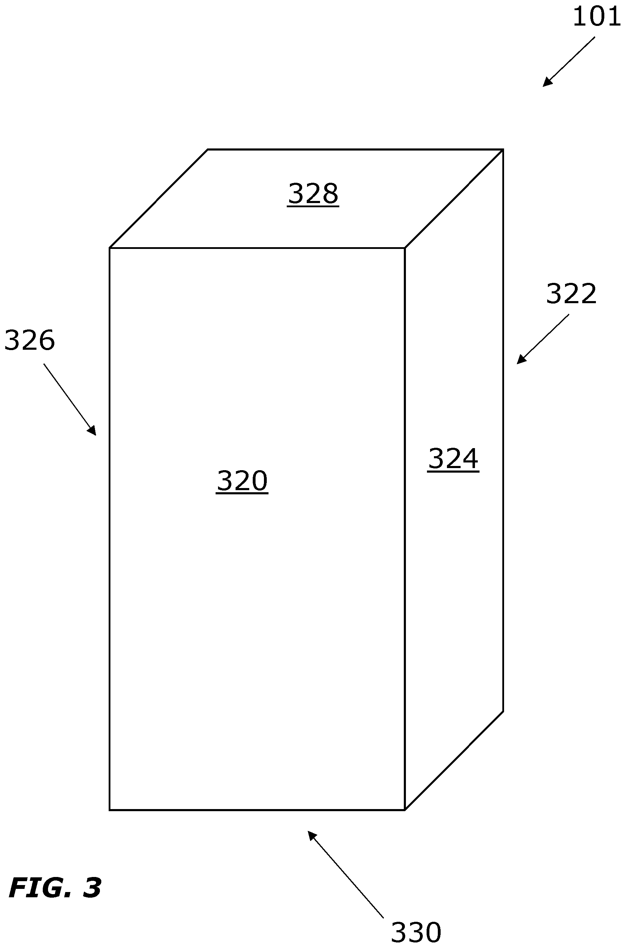

Specific, illustrative, examples of a duct 104 will now be described with reference to the geometry and orientation of Figure 3. It will be understood that the gas flow paths illustrated are exemplary only, and that any suitable paths may be used.

In Figure 3, a schematic of an example switchgear 101 is shown. In the normal, installed, operation of the switchgear, the skilled person will understand that switchgear 101 can be considered to comprise a front surface 320, a rear surface opposite the front surface 322 (actual surface not shown), two side surfaces 324, 326 (326 actual surface not shown), each extending between the front surface and the rear surface, a top surface 328, and a base surface 330 (actual surface not shown) opposite the top surface. Access to the switchgear can be via the front surface and/or the top surface, or any other surface, depending on the specific configuration of the switchgear. IAC A/B-FLR rating means that the user is protected from vented gases at each of the front 320, side 324, 326, rear 322 and top 328 surfaces of the switchgear.

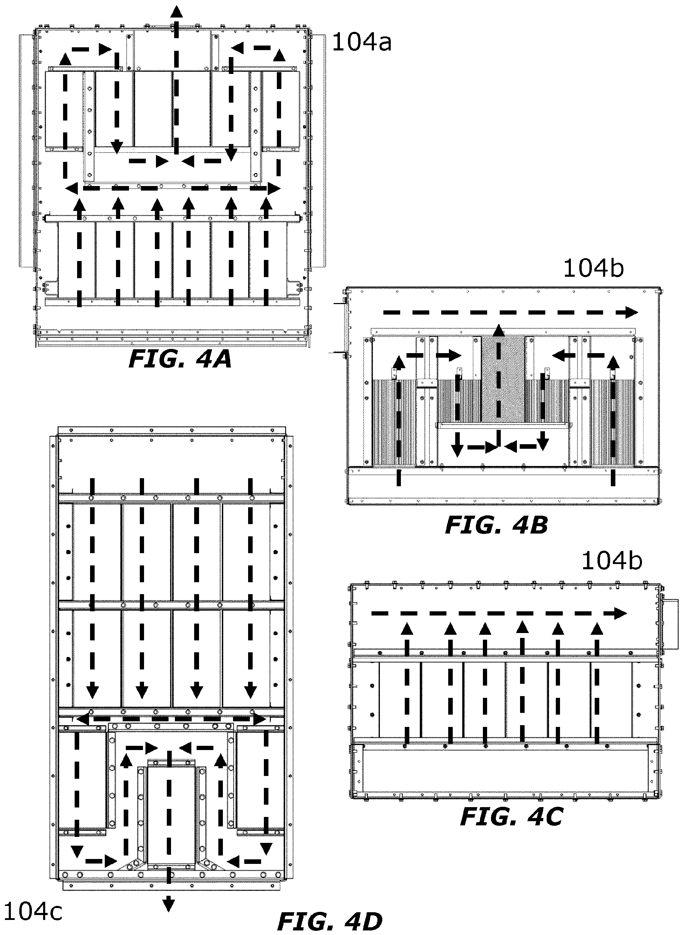

With reference to Figures 3 and 4A-4D, in a first example implementation, there are three ducting portions. The first portion 104a of the duct comprises a rear duct arranged along the rear surface 322 of the switchgear 101, the third portion 104b of the duct comprises a top duct arranged along the top surface 328, and the second portion 104c of the duct comprises a side duct arranged along one of the side surfaces 324/326. Gas flow through the duct portions is shown by the dashed lines. There is a minimum angle of 180 degrees between the first 104a and second 104c duct portions. The gas path length is increased by using the space beside the switchgear 101.

Figure 4A illustrates the first duct portion, or rear duct, 104a. The path within the first portion of the duct comprises two 180 degree turns on either side of the duct portion. Figure 4B illustrates one example of a third portion 104b of the duct, comprising two 180 degree turns on either side of the duct portion. Figure 4C illustrates an alternative example of the third portion of the duct; the parallel path arrangement of Figure 4C can reduce a back pressure in the rear duct as compared to the tortuous path of Figure 4B, whilst still efficiently cooling the gas. Figure 4D illustrates the second duct portion, or side duct, 104c. The path within the second portion of the duct also comprises two 180 degree turns on either side of the duct portion. The outlet is configured to vent gas out of a bottom of the side duct.

The arrangement of Figures 4A-4D is compact, and by arranging the duct across three mutually perpendicular surfaces, a size of the switchgear system is not significantly increased in any one dimension. However, the arrangement does not allow access to a top side 328 of the switchgear 101, due to the presence of the third duct portion. Other arrangements are therefore also considered which facilitate such access.

With reference to Figures 3 and 5A-4C, in a second example implementation, there are three ducting portions. The first portion 10a4 of the duct comprises a base duct arranged along the base surface 330, the third portion 104b of the duct comprises a rear duct arranged along the rear surface 322, and the second portion 104c of the duct comprises a side duct arranged along one of the side surfaces 324/326. Gas flow through the duct portions is shown by the dashed lines. There is a minimum angle of 180 degrees between the second 104c and third 104b duct portions. The gas path length is increased by using the space beside the switchgear 101.

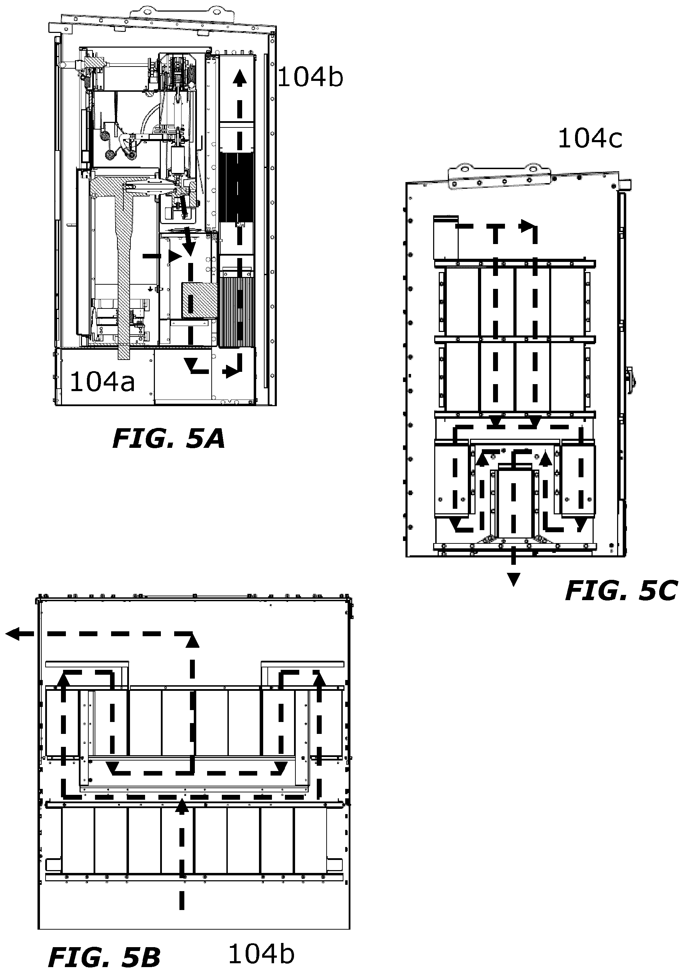

Figure 5A shows a side on view of the base duct 104a and the rear duct 104b. Figure 5B illustrates a front view of the rear duct (third portion 104b of the duct), comprising two 180 degree turns on either side of the duct portion. Figure 5C illustrates the second duct portion, or side duct, 104c. The path within the second portion of the duct also comprises two 180 degree turns on either side of the duct portion. The outlet is configured to vent gas out of a bottom of the side duct. The arrangement of Figures 5A-5C is compact, and by arranging the duct across three mutually perpendicular surfaces, a size of the switchgear system is not significantly increased in any one dimension. Moreover, the arrangement allows access to a top side 328 of the switchgear 101.

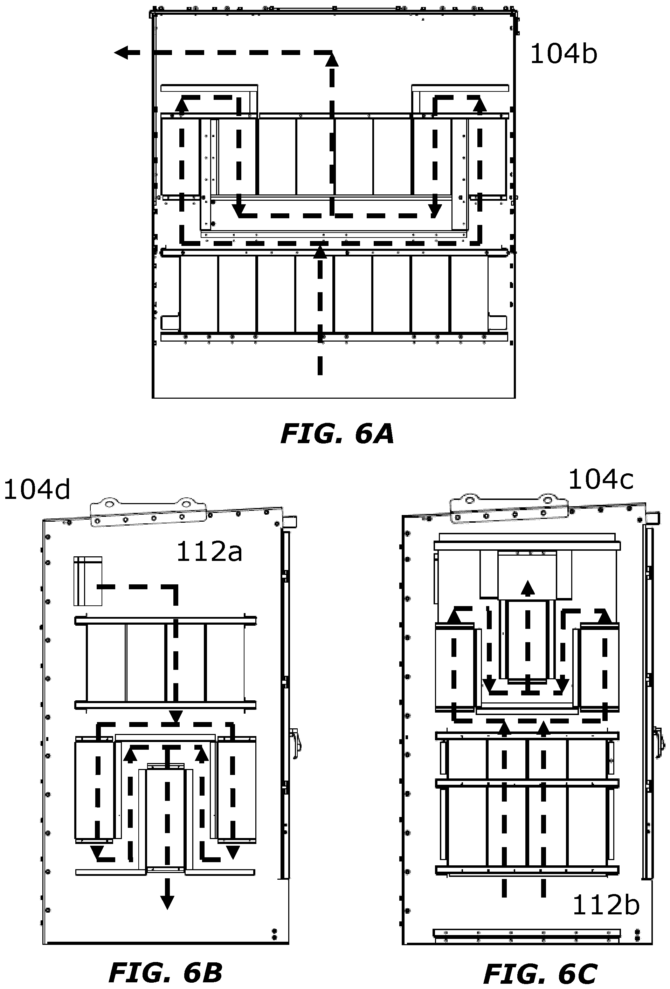

With reference to Figures 3 and 6A-6C, in a third example implementation, there are four ducting portions. The duct further comprises a fourth portion disposed between the second 104c and third 104b portions of the duct. In this implementation, the first portion of the duct comprises a base duct arranged along the base surface (not shown). The third portion 104b of the duct comprises a rear duct arranged along the rear surface 322, as shown in Figure 6A, and the second 104c and fourth 104d portions of the duct comprise a side duct arranged along one of the side surfaces 324/326. There is a minimum angle of 180 degrees between the fourth 104d and second 104c duct portions.

In particular, the side duct comprises a first side 112a and a second side 112b separated by an internal division (not shown). The first side 112a corresponds to the fourth portion 104d of the duct, as shown in Figure 6B, and the second side 112b corresponds to the second portion 104c of the duct, as shown in Figure 6C. The path enters the side duct on the first side of the internal division and the outlet is on the second side of the internal division, wherein the path turns 180 degrees between the first side of the internal division and the second side of the internal division. The fourth duct portion 104d corresponds to a "first pass" through the side duct and the second duct portion 104c corresponds to a "second pass" through the side duct.

The path within each of the second 104c, third 104b and fourth 104d portions of the duct comprises two 180 degree turns on either side of the respective duct portions. The outlet is configured to vent gas out of a top of the side duct on the second side 112b (i.e. after the second pass through the side duct).

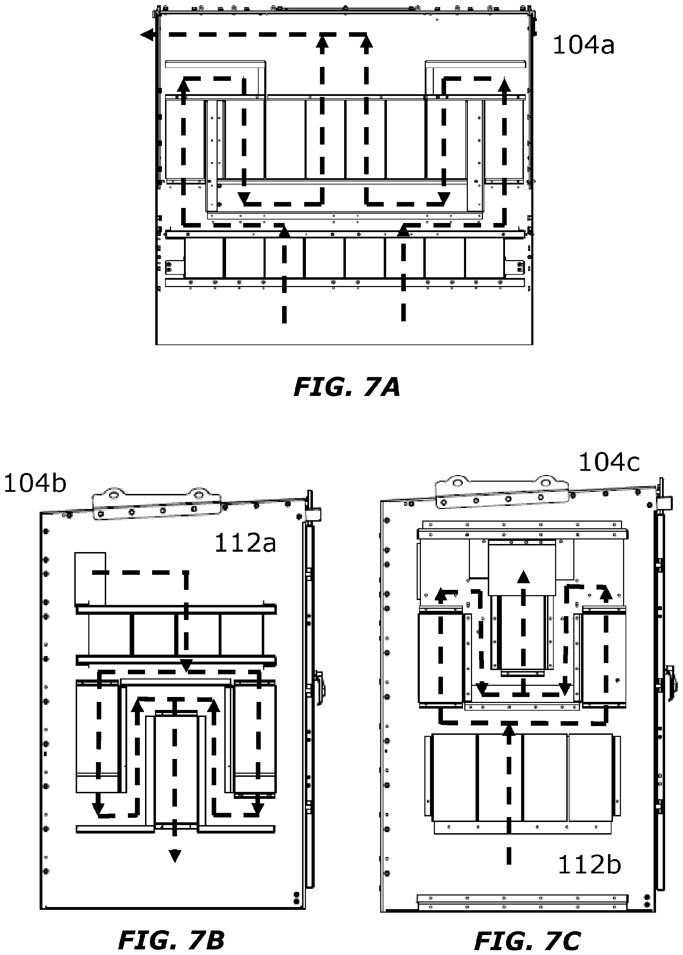

With reference to Figures 3 and 7A-7C, in a fourth example implementation, there are three ducting portions. The first portion 104a of the duct comprises a rear duct arranged along the rear surface 322, as shown in Figure 7A, and the third 104b and second portions 104c of the duct comprise a side duct arranged along one of the side surfaces 324/326. There is a minimum angle of 180 degrees between the third 104b and second 104c duct portions.

The side duct comprises a first side 112a and a second side 112b separated by an internal division (not shown). The first side 112a corresponds to the third portion 104b of the duct, as shown in Figure 7B, and the second side 112b corresponds to the second portion 104c of the duct, as shown in Figure 7C. The path enters the side duct on the first side of the internal division and the outlet is on the second side of the internal division, wherein the path turns 180 degrees between the first side of the internal division and the second side of the internal division. The third duct portion 104b corresponds to a "first pass" through the side duct and the second duct portion 104c corresponds to a "second pass" through the side duct.

The path within each of the first 104a, third 104b and second 104c portions of the duct comprises two 180 degree turns on either side of the respective duct portions. The outlet is configured to vent gas out of a top of the side duct on the second side 112b (i.e. after the second pass through the side duct). By removing / avoiding the use of a base duct or top duct, this arrangement can facilitate a switchgear system with a reduced height.

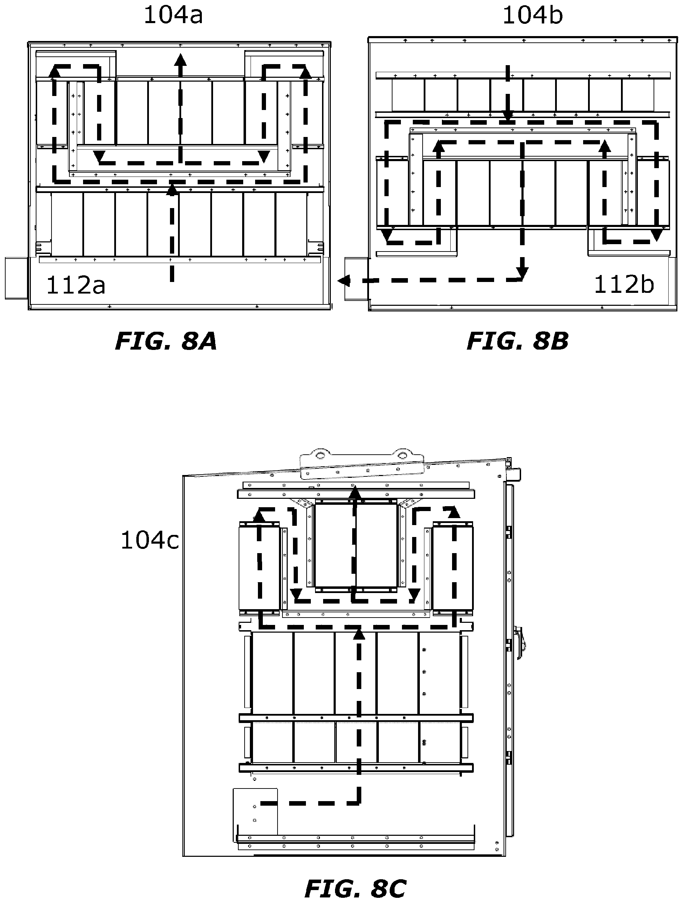

With reference to Figures 3 and 8A-8C, in a fifth example implementation, there are three ducting portions. The first 104a and third 104b portions of the duct comprises a rear duct arranged along the rear surface 322, and the second portion 104c of the duct comprises a side duct arranged along one of the side surfaces 324/326, as shown in Figure 8C. There is a minimum angle of 180 degrees between the first 104a and third 104b duct portions. The rear duct comprises a first side 112a and a second side 112b separated by an internal division (not shown). The first side 112a corresponds to the first portion 104a of the duct, as shown in Figure 8A, and the second side 112b corresponds to the third portion 104b of the duct, as shown in Figure 8B.

The inlet is on the first side 112a of the internal division and the path exits the rear duct on the second side of the internal division, wherein the path turns 180 degrees between the first side of the internal division and the second side of the internal division. Since the side duct and rear duct are arranged on mutually perpendicular surfaces, it can be seen that there is also a 90 degree turn between the second and third portions of the duct. The outlet is configured to vent gas out of a top of the side duct. By removing / avoiding the use of a base duct or top duct, this arrangement can facilitate a switchgear system with a reduced height. Moreover, the lateral dimension of the system can be reduced as compared to the arrangement of Figures 7A-7C.

In a sixth example arrangement (not shown in the figures), there are three ducting portions. The first portion of the duct comprises a base duct arranged along the base surface, and the second and third portions of the duct comprise a rear duct arranged along the rear surface. The rear duct comprises a first side and a second side separated by an internal division, wherein the first side corresponds to the third portion of the duct and the second side corresponds to the second portion of the duct. The path enters the rear duct on the first side of the internal division (third duct portion) and the outlet is on the second side of the internal division (second duct portion), wherein the path turns 180 degrees between the first side of the internal division and the second side of the internal division. By removing / avoiding the use of a side duct, this duct configuration can reduce a lateral dimension of the switchgear system as compared to the arrangement of Figures 8A-8C.

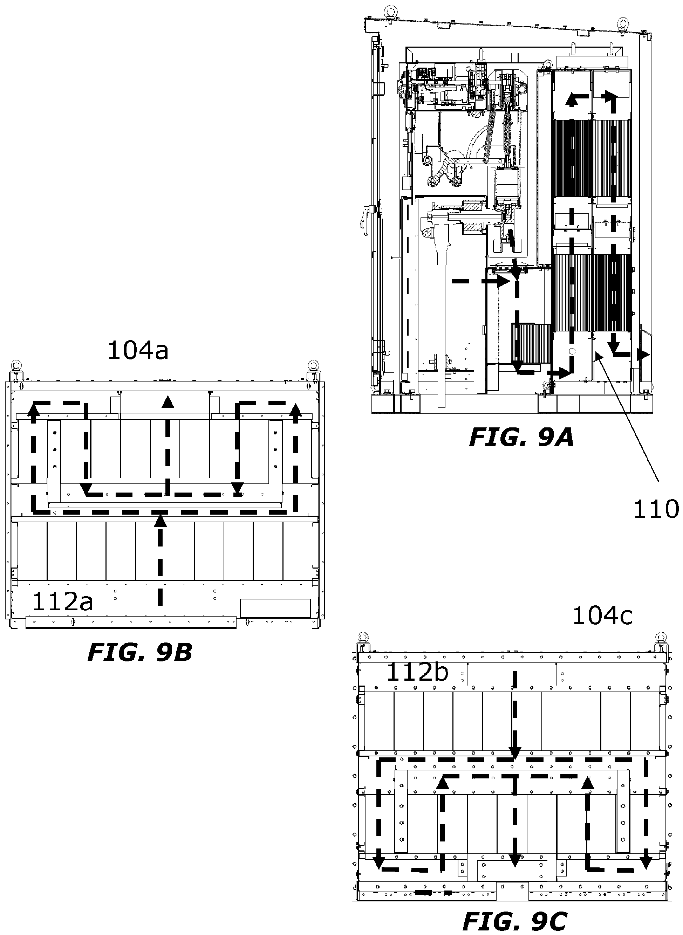

With reference to Figures 3 and 9A-9C, in a seventh example implementation, there are two ducting portions. The duct comprises a first portion 104a and a second portion 104c. There is a minimum angle of 180 degrees between the first 104a and second 104c duct portions. The arc ignition compartment releases directly into the duct (i.e. there is no base portion or base duct).

The duct is arranged along the rear surface 322 of the switchgear, as shown in the side on view of Figure 9A, though the duct may be arranged along any (single) surface of the switchgear, as appropriate. For example, the duct can be arranged along a side surface of the switchgear. In this example the first and second portions are adjacent one another, with no interposing portions.

The duct (rear duct, side duct, etc.) comprises a first side 112a and a second side 112b separated by an internal division (110). The first side 112a corresponds to the first portion 104a of the duct, as shown in the front view cross section of Figure 9B, and the second side 112b corresponds to the second portion 104c of the duct, as shown in the front view cross section of Figure 9C. The path enters the duct on the first side of the internal division and the outlet is on the second side of the internal division, wherein the path turns 180 degrees between the first side of the internal division and the second side of the internal division. The first duct portion 104a corresponds to a "first pass" through the duct and the second duct portion 104c corresponds to a "second pass" through the duct.

The path within (internal to) each of the first 104a and second 104c portions of the duct comprises two 180 degree turns on either side of the respective duct portions (see Figures 9B, 9C). The outlet is configured to vent gas out of a top of the duct on the second side 112b (i.e. after the second pass through the side duct). By removing / avoiding the use of a base duct or top duct, this arrangement can facilitate a switchgear system with a reduced height.

The ducts 104 described herein can be formed of a sheet metal, or any other suitable material. Any of the above-described duct arrangements and/or duct portions can comprise one or more arc absorbers within the duct. The arc absorbers can be indicated by the rectangles 250 shown within the duct, as illustrated in the duct portion 104n of Figure 2. Each arc absorber comprises small perforations or holes, which allow the flow of gases through it. The arc absorbers act to filter or cool down the gases, including filtering or trapping any burning particles within the gas flow; trapping the burning particles prevents the particles from being expelled or exhausted from the switchgear duct or chimney and into the environment (either the atmosphere, or an enclosure surrounding the switchgear and duct).

Each arc absorber can comprise a ceramic arc absorber, as shown in Figure 10A, and/or a stack of perforated metal sheets or wire meshes. The stack of perforated metal sheets can comprise one of more of: a stack of metal sheets with round apertures, as shown in Figure 10B; a stack of metal sheets with square apertures, as shown in Figure 10C; or a stack comprising alternating layers of metal sheets with round apertures and metal sheets with square apertures, as shown in Figure 10D. In other words, the arrangement of Figure 10D comprises layers of metal sheets with a round aperture alternated with layers of metal sheets with square apertures (round aperture, square aperture, round aperture, square aperture, etc).

These different arc absorbers can be provided in any suitable combination, and in any suitable locations, within the duct portions 104n. Different sizes and/or types of arc absorber can be combined within a single duct portion, as appropriate.

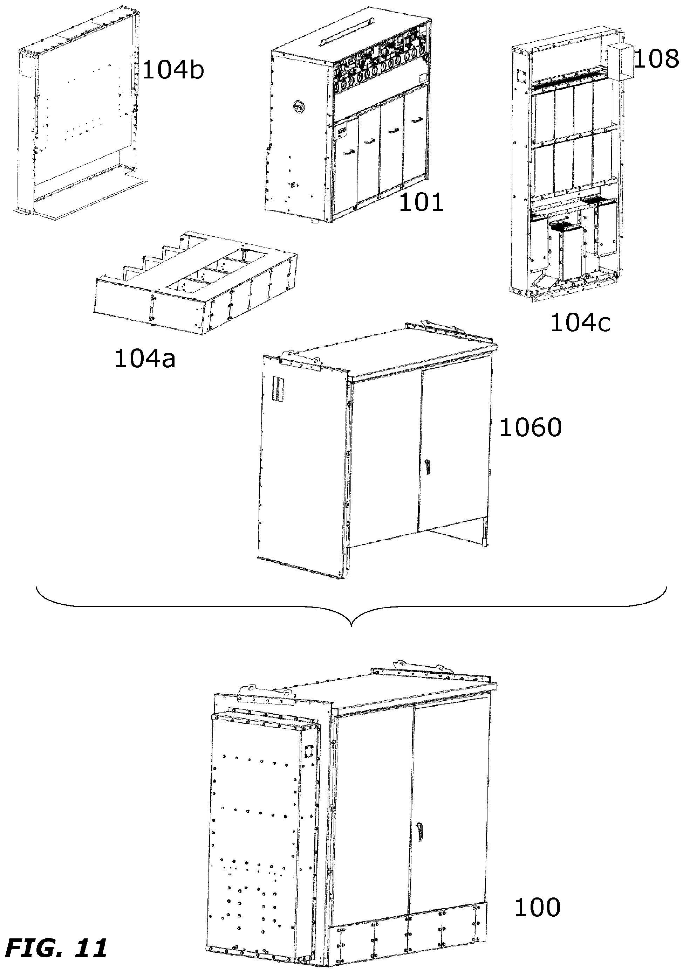

Figure 11 shows an example system 100 comprising the switchgear 101, first 104a, third 104b and second 104c duct portions (the second duct portion comprising outlet 108) and an enclosure 1060. In this specific example, the enclosure encloses the base duct (first portion 104a), and the rear and side ducts (third and second portions 104b, 10c) are attached to an outside of the enclosure. The outlet is configured to vent gases into the enclosure 1060. Any other suitable arrangement of duct, switchgear and enclosure can be provided, as would be understood by the skilled person.

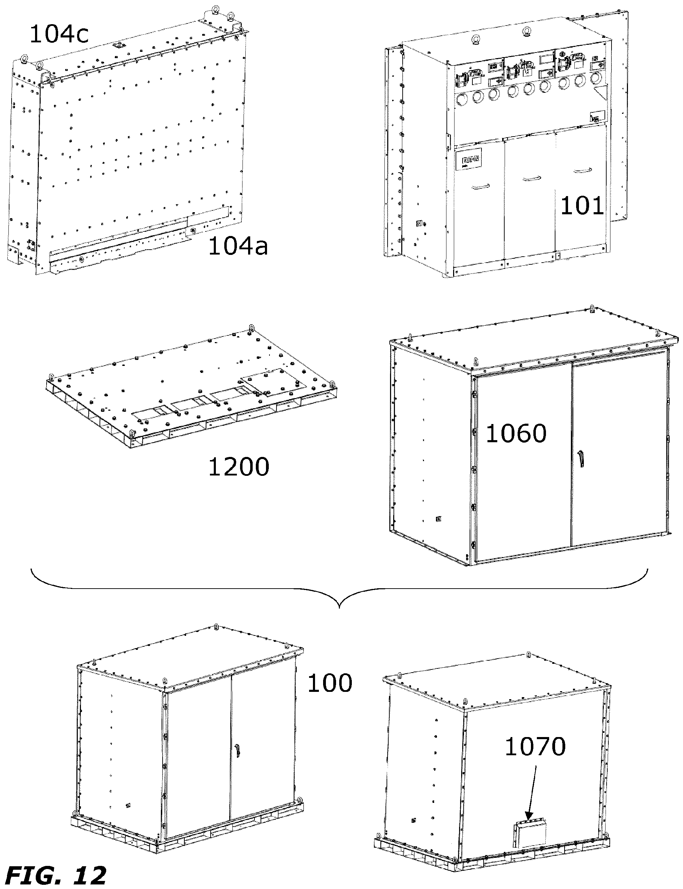

Figure 12 shows another example system 100 comprising the switchgear 101, first 104a and second 104c duct portions (the second duct portion comprising outlet 108) and an enclosure 1060. In this specific example, the enclosure encloses the switchgear and the rear duct (first and second portions 104a, 10c), and the base 1200 or base plinth is attached to an outside of the enclosure 1060. The outlet can be configured to vent gases into the enclosure 1060, or into the environment. In this specific example, the gas is vented into the environment via outlet 108 through a vent or opening 1070 in the enclose 1060. Any other suitable arrangement of duct, switchgear and enclosure can be provided, as would be understood by the skilled person.

Features described herein can be combined in any suitable arrangement or combination.

The following numbered examples are also disclosed.

Example 1: A system, comprising: a switchgear, wherein gas is generated within the switchgear during an arc event; and a duct having at least first and second portions, the duct further comprising: an inlet to receive the generated gas into the duct, wherein the inlet is formed in the first portion of the duct, an outlet to expel the generated gas from the duct, wherein the outlet is formed in the second portion of the duct, and a path formed between the inlet and the outlet to channel the generated gas through the duct; wherein a minimum angle between the path in two of the at least two ducting portions is 180 degrees.

Example 2: The system of example 1, wherein the first and second portions of the duct comprise a duct arranged along a surface of the switchgear, wherein the duct comprises a first side and a second side separated by an internal division, wherein the first side corresponds to the first portion of the duct and the second side corresponds to the second portion of the duct, and wherein the path enters the side duct on the first side of the internal division and the outlet is on the second side of the internal division, wherein the path turns 180 degrees between the first side of the internal division and the second side of the internal division.

Example 3: The system of example 1, wherein the duct further comprises a third portion, the third portion disposed between the first and second portions, optionally, wherein there is at least a 90 degree turn between the path in the first portion and the path in the third portion, and wherein there is at least a 90 degree turn between the path in the third portion and the path in the second portion.

Example 4: The system of example 3, wherein the path within at least two of the first, second and third portions of the duct comprises at least one 180 degree turn, optionally, wherein the path within at least two of the first, second and third portions of the duct comprises at least two 180 degree turns.

Example 5:The system of example 3 or example 4, wherein the switchgear comprises a front surface, a rear surface opposite the front surface, two side surfaces, each extending between the front surface and the rear surface, a top surface, and a base surface opposite the top surface.

Example 6: The system of example 5, wherein the first portion of the duct comprises a base duct arranged along the base surface, the third portion of the duct comprises a rear duct arranged along the rear surface, and the second portion of the duct comprises a side duct arranged along one of the side surfaces

Example 7: The system of example 5, the duct further comprising a fourth portion disposed between the second and third portions of the duct, wherein the first portion of the duct comprises a base duct arranged along the base surface, the third portion of the duct comprises a rear duct arranged along the rear surface, and the second and fourth portions of the duct comprise a side duct arranged along one of the side surfaces, wherein the side duct comprises a first side and a second side separated by an internal division, wherein the first side corresponds to the fourth portion of the duct and the second side corresponds to the second portion of the duct, wherein the path enters the side duct on the first side of the internal division and the outlet is on the second side of the internal division, wherein the path turns 180 degrees between the first side of the internal division and the second side of the internal division.

Example 8: The system of example 5, wherein the first portion of the duct comprises a rear duct arranged along the rear surface, and the third and second portions of the duct comprise a side duct arranged along one of the side surfaces, wherein the side duct comprises a first side and a second side separated by an internal division, wherein the first side corresponds to the third portion of the duct and the second side corresponds to the second portion of the duct, wherein the path enters the side duct on the first side of the internal division and the outlet is on the second side of the internal division, wherein the path turns 180 degrees between the first side of the internal division and the second side of the internal division.

Example 9: The system of example 5, wherein the first and third portions of the duct comprises a rear duct arranged along the rear surface, and the second portion of the duct comprises a side duct arranged along one of the side surfaces, wherein the rear duct comprises a first side and a second side separated by an internal division, wherein the first side corresponds to the first portion of the duct and the second side corresponds to the third portion of the duct, wherein the inlet is on the first side of the internal division and the path exits the rear duct on the second side of the internal division, wherein the path turns 180 degrees between the first side of the internal division and the second side of the internal division.

Example 10: The system of example 5, wherein the first portion of the duct comprises a base duct arranged along the base surface, and the third and second portions of the duct comprise a rear duct arranged along the rear surface, wherein the rear duct comprises a first side and a second side separated by an internal division, wherein the first side corresponds to the third portion of the duct and the second side corresponds to the second portion of the duct, wherein the path enters the rear duct on the first side of the internal division and the outlet is on the second side of the internal division, wherein the path turns 180 degrees between the first side of the internal division and the second side of the internal division.

Example 11: The system of example 5, wherein the first portion of the duct comprises a rear duct arranged along the rear surface, the third portion of the duct comprises a top duct arranged along the top surface, and the second portion of the duct comprises a side duct arranged along one of the side surfaces.

Example 12: The system of any of examples 1 to examples 11, wherein one or more arc absorbers are disposed within the duct.

Example 13: The system of example 12, wherein each of the one or more arc absorbers comprises a ceramic arc absorber and/or a stack of perforated metal sheets.

Example 14: The system of example 13, wherein each stack of perforated metal sheets comprises: a stack of metal sheets with round apertures; or a stack of metal sheets with square apertures; or a stack comprising alternating layers of metal sheets with round apertures and metal sheets with square apertures.

Example 15: The system of any of examples 1 to examples 14, wherein: one or more of the first, third and second portions of the duct are formed as separate components; and/or two or more of the first, third and second portions of the duct are integrally formed.

## Claims

1. A system (100), comprising:
a switchgear, wherein gas is generated within the switchgear during an arc event; and
a duct (104) having at least first (104a) and second (104c) portions, the duct further comprising:
an inlet (106) to receive the generated gas into the duct, wherein the inlet is formed in the first portion of the duct,
an outlet (108) to expel the generated gas from the duct, wherein the outlet is formed in the second portion of the duct, and
a path formed between the inlet and the outlet to channel the generated gas through the duct;
wherein a minimum angle between the path in two of the at least two ducting portions is 180 degrees; and
wherein the first and second portions of the duct comprise a duct arranged along a surface of the switchgear,
wherein the duct comprises a first side (112a) and a second side (112b) separated by an internal division (110), wherein the first side corresponds to the first portion of the duct and the second side corresponds to the second portion of the duct, and
wherein the path enters the side duct on the first side of the internal division and the outlet is on the second side of the internal division, wherein the path turns 180 degrees between the first side of the internal division and the second side of the internal division.

2. The system of claim 1, wherein the duct (104) further comprises a third portion (104b), the third portion disposed between the first and second portions,
optionally, wherein there is at least a 90 degree turn between the path in the first portion and the path in the third portion, and wherein there is at least a 90 degree turn between the path in the third portion and the path in the second portion.

3. The system of claim 2, wherein the path within at least two of the first, second and third portions of the duct comprises at least one 180 degree turn, optionally, wherein the path within at least two of the first, second and third portions of the duct comprises at least two 180 degree turns.

4. The system of claim 2, wherein the switchgear comprises a front surface, a rear surface opposite the front surface, two side surfaces, each extending between the front surface and the rear surface, a top surface, and a base surface opposite the top surface.

5. The system of claim 4, wherein the first portion of the duct comprises a base duct arranged along the base surface, the third portion of the duct comprises a rear duct arranged along the rear surface, and the second portion of the duct comprises a side duct arranged along one of the side surfaces.

6. The system of claim 4, the duct further comprising a fourth portion disposed between the second and third portions of the duct,
wherein the first portion of the duct comprises a base duct arranged along the base surface, the third portion of the duct comprises a rear duct arranged along the rear surface, and the second and fourth portions of the duct comprise a side duct arranged along one of the side surfaces,
wherein the side duct comprises a first side (112a) and a second side (112b) separated by an internal division (110), wherein the first side corresponds to the fourth portion of the duct and the second side corresponds to the second portion of the duct,
wherein the path enters the side duct on the first side of the internal division and the outlet is on the second side of the internal division, wherein the path turns 180 degrees between the first side of the internal division and the second side of the internal division.

7. The system of claim 4, wherein the first portion of the duct comprises a rear duct arranged along the rear surface, and the third and second portions of the duct comprise a side duct arranged along one of the side surfaces,
wherein the side duct comprises a first side and a second side separated by an internal division, wherein the first side corresponds to the third portion of the duct and the second side corresponds to the second portion of the duct,
wherein the path enters the side duct on the first side of the internal division and the outlet is on the second side of the internal division, wherein the path turns 180 degrees between the first side of the internal division and the second side of the internal division.

8. The system of claim 4, wherein the first and third portions of the duct comprises a rear duct arranged along the rear surface, and the second portion of the duct comprises a side duct arranged along one of the side surfaces,
wherein the rear duct comprises a first side and a second side separated by an internal division, wherein the first side corresponds to the first portion of the duct and the second side corresponds to the third portion of the duct,
wherein the inlet is on the first side of the internal division and the path exits the rear duct on the second side of the internal division, wherein the path turns 180 degrees between the first side of the internal division and the second side of the internal division.

9. The system of claim 4, wherein the first portion of the duct comprises a base duct arranged along the base surface, and the third and second portions of the duct comprise a rear duct arranged along the rear surface,
wherein the rear duct comprises a first side and a second side separated by an internal division, wherein the first side corresponds to the third portion of the duct and the second side corresponds to the second portion of the duct,
wherein the path enters the rear duct on the first side of the internal division and the outlet is on the second side of the internal division, wherein the path turns 180 degrees between the first side of the internal division and the second side of the internal division.

10. The system of claim 4, wherein the first portion of the duct comprises a rear duct arranged along the rear surface, the third portion of the duct comprises a top duct arranged along the top surface, and the second portion of the duct comprises a side duct arranged along one of the side surfaces.

11. The system of claim 1, wherein one or more arc absorbers are disposed within the duct.

12. The system of claim 11, wherein each of the one or more arc absorbers comprises a ceramic arc absorber and/or a stack of perforated metal sheets.

13. The system of claim 12, wherein each stack of perforated metal sheets comprises:
a stack of metal sheets with round apertures; or
a stack of metal sheets with square apertures; or
a stack comprising alternating layers of metal sheets with round apertures and metal sheets with square apertures.

14. The system of claim 1, wherein:
one or more of the first, third and second portions of the duct are formed as separate components; and/or
two or more of the first, third and second portions of the duct are integrally formed.
